# EUROPÄISCHE PATENTANMELDUNG

(11) **EP 0 538 182 A1**
(43) Veröffentlichungstag der Anmeldung: **21.04.1993**
(21) Anmeldenummer: 92810568.3
(22) Anmeldetag: 23.07.1992
(51) Int. Cl.: G01F 23/26

(54) **Kapazitive Niveaumess-Sonde sowie deren Verwendung**

(30) Priorität: 15.10.1991 CH 3022/91
(71) Anmelder: HECTRONIC AG, CH-5200 Brugg (CH)
(72) Erfinder: Forster, Ernst, CH-8048 Zürich (CH); Ledergerber, Markus, CH-5200 Brugg (CH)
(74) Vertreter: Frauenknecht, Alois J.

(57) **Zusammenfassung**

Eine kapazitive Niveaumess-Sonde zur Verwendung in Tankanlagen für Treibstoffe und Lösungsmittel ist auf der Basis eines Zylinderkondensators aufgebaut.

Die Vorrichtung weist relativ lange Rohrsegmente (20; T₀-A₅) auf, wodurch sich zahlreiche Bauelemente einsparen lassen und nur ein Minimum an Leitungen notwendig sind. Dadurch erreicht die Vorrichtung eine hohe Betriebssicherheit und lässt sich in einfacher Weise explosionsgeschützt ausführen.

Die Messgenauigkeit liegt im Bereich unterhalb von einem Millimeter Füllstandshöhe und erlaubt ein einwandfreies Detektieren von mehreren Medien bzw. von deren Trennschichten.

## Beschreibung

Die vorliegende Erfindung bezieht sich auf eine Füllstandsmessvorrichtung mit in die zu messenden flüssigen Medien eintauchenden, segmentierten, in einer Reihe angeordneten Mess-Kondensatoren.

Derartige Füllstandsmessvorrichtungen, auch Niveausonden genannt, sind in verschiedenen Ausführungen bekannt, so beispielsweise zur Überwachung von Tankanlagen als segmentierter Plattenkondensator ausgeführt mit mehreren hundert Einzelsegmenten zur Erzielung einer Auflösung von weniger als einem Millimeter Mess-Schritt.

Nachteilig bei einem derartigen Mess-Kondensator sind einerseits die Vielzahl von Einzelelementen mit dazugehörigen Anschlussleitungen sowie dessen komplexer mechanischer Aufbau, welcher die Einhaltung der spezifischen Sicherheitsnormen erschwert.

Es ist daher Aufgabe der Erfindung, eine kapazitive Füllstandsmessvorrichtung zu schaffen, welche eine hohe Betriebssicherheit und Auflösung aufweist, nur wenige Mess-Segmente und elektrische Anschlüsse im Tankraum benötigt und allen derzeit bekannten Vorschriften für die Lagerung und den Umschlag von brennbaren und/oder chemisch reagierenden Medien entspricht bzw. angepasst werden kann.

Diese Aufgabe ist dadurch gelöst, dass ein metallisches Rohr als eine Platte des Mess-Kondensators vorgesehen ist, während die zweite Platte als konzentrisch dazu angeordnete Rohrsegmente ausgebildet ist und wobei die Länge der einzelnen Rohrsegmente ein Mehrfaches ihres Durchmessers beträgt.

Die erfindungsgemäss ausgestaltete Niveaumess-Sonde auf der Basis von Zylinderkondensatoren erlaubt, in Verbindung mit einer an sich bekannten Temperaturmess-Sonde und mittels einer Auswerteelektronik, bestehend aus an sich bekannten Interfaces und einem handelsüblichen Mikroprozessor, eine millimetergenaue Ausmessung des Füllstandes. Durch angeschlossene Rechner lässt sich eine litergenaue Feststellung der Füllmenge einer Tankanlage realisieren. In der Regel genügen bei mittleren Tanktiefen fünf bis sieben Rohrsegmente zur Erzielung der notwendigen Auflösung in Mess-Schritte.

In abhängigen Ansprüchen sind vorteilhafte Weiterbildungen des Erfindungsgegenstandes beschrieben.

Die Ausgestaltung nach Anspruch 2 ist besonders unempfindlich gegen Verschmutzungen, da sie durch das äussere Rohr geschützt ist, welches seinerseits eine Platte des Mess-Kondensators darstellt.

Durch das enge Aneinanderreihen der Rohrsegmente gemäss Anspruch 3 ist eine kontinuierliche Auflösung der Mess-Strecke gewährleistet.

Überragende Isolierringe nach Anspruch 4 verringern bei verschmutzten Medien die Gefahr von kapazitiven Brücken, welche das Messergebnis verfälschen könnten.

Galvanische Verbindungen gemäss den Ansprüchen 5 und 6 verhindern statische Aufladungen und dienen der Reduktion von störenden elektrischen Feldern.

Die Verwendung von Segmentkupplungen, entsprechend Anspruch 7, erlaubt einen einfachen Zusammenbau der Sonde, ohne bei eventuell notwendigen Reinigungsarbeiten die Gefahr von Kapazitätsänderungen hervorzurufen.

Die Ausführungsform der Segmentkupplung gemäss Anspruch 8 ist günstig für die Montage und erlaubt die Durchführung der zu den einzelnen Rohrsegmenten geführten Kabel durch die Längsnuten.

Der in Anspruch 9 aufgeführte Isolierring wird nach dem Einlegen der Kabel über die Segmentkupplung geschoben und dient der einfachen und präzisen Distanzierung der Rohrelemente.

Die Flammenrückschlagsicherung nach Anspruch 10 wird bei brennbaren Medien vorausgesetzt und kann problemlos in das metallische Rohr integriert werden.

Die Weiterbildung nach Anspruch 11 dient der flammdurchschlaggesicherten Durchführung der Messleitungen vom Tankraum zur Auswerteelektronik.

Die Verwendung des Erfindungsgegenstandes gemäss Anspruch 12 ist sehr universell und erlaubt sowohl einen Einsatz in der Mineralöl- und Treibstoffbranche als auch in der Prozesstechnik.

Insbesondere geeignet ist die Vorrichtung für Tankräume gemäss Anspruch 13 und erlaubt die präzise Füllstandsinventur von Tankanlagen.

Nachfolgend wird anhand von Zeichnungen der Erfindungsgegenstand näher beschrieben.

Es zeigen:
Fig. 1 eine schematische Darstellung eines Tankraumes mit einer erfindungsgemäss aufgebauten Füllstandsmessvorrichtung
Fig. 2 die praktische Ausgestaltung einer Füllstandsmessvorrichtung in verkürzter Schnitt-Darstellung
Fig. 3 einen oberen Teilbereich der Fig. 2 in vergrösserter Darstellung
Fig. 4 einen unteren Teilbereich der Fig. 2 in vergrösserter Darstellung, sowie
Fig. 5 Einzelheiten aus der Fig. 4 in einer detaillierten Zeichnung, und
Fig. 6 den Zusammenbau der einzelnen Rohrsegmente.

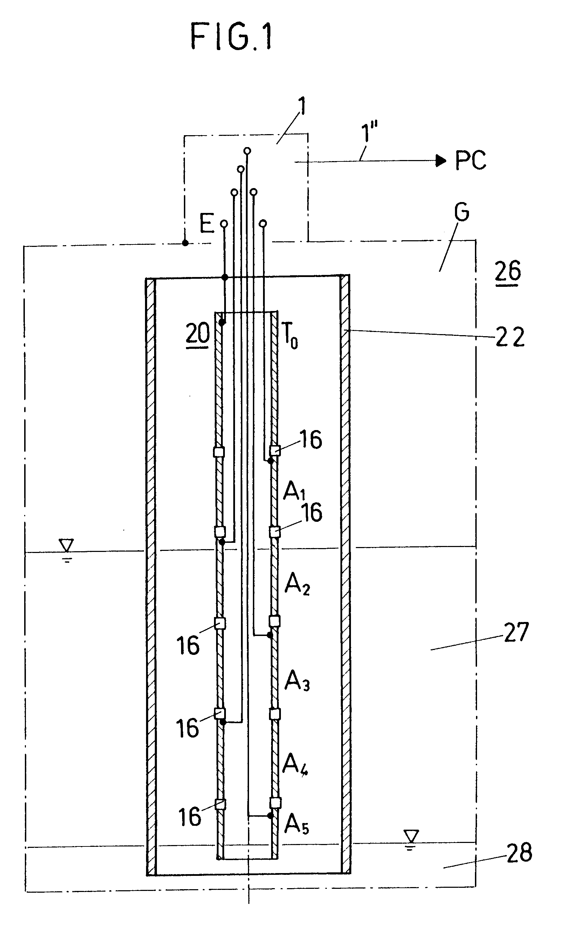

In Fig. 1 ist mit 1 eine Auswerteelektronik bezeichnet, welche über einem Tank 26, teilweise gefüllt mit Benzin 27, angeordnet ist. Im untersten Bereich des Tankvolumens des Tanks 26 befindet sich eine Wasserschicht 28. Über dem Niveau des Benzins 27 befindet sich ein Gasraum G.

Die Füllstandsmessvorrichtung besteht im wesentlichen aus einem äusseren metallischen Rohr 22 und dazu konzentrisch im Innern angeordneten Rohrsegmenten 20, welche mit T₀ bzw. A₁-A₅ bezeichnet sind und durch elektrische Leitungen mit der Auswerteelektronik 1 verbunden sind. Das oberste Rohrsegment T₀ ist mit dem Rohr 22 und dem Nullpotential E verbunden. Die einzelnen Rohrsegmente 20T₀-20A₅ sind voneinander jeweils durch Isolierringe 16 distanziert.

Das physikalische Messprinzip eines erfindungsgemäss aufgebauten Zylinderkondensators ist an sich notorisch bekannt und beruht auf einer Feststellung der Kapazitätsänderung bei unterschiedlicher Füllung des Kondensators mit einem Dielektrikum bei an sich bekannten übrigen physikalischen Grössen, wie Temperatur, Dielektrizitätskonstanten etc., der zu überwachenden Medien.

Die Rohrsegmente 20A₁-20A₄ sind gleich lang, während das oberste Segment T₀ länger ausgeführt ist und das unterste, üblicher Weise in Wasser eintauchende Segment A₅, kürzer ausgestaltet ist. Die Wahl der Längen der Segmente sowie die Distanzierung dieser Segmente zueinander ist abhängig von der zu erzielenden Messgenauigkeit und vom einzufüllenden Medium bzw. dessen Dielektrizitätskonstanten. Die eigentliche Messwertberechnung erfolgt in einem oder mehreren Personalcomputern PC, welche über Signalleitungen 1˝ mit der Auswerteelektronik 1 verbunden sind.

In nachfolgenden Figuren sind gleiche Teile mit gleichen Bezugszeichen versehen; aus Übersichtlichkeitsgründen ist auf eine Darstellung der an sich bekannten Temperaturmessung der Medien mittels Thermistoren oder Thermoelementen verzichtet worden.

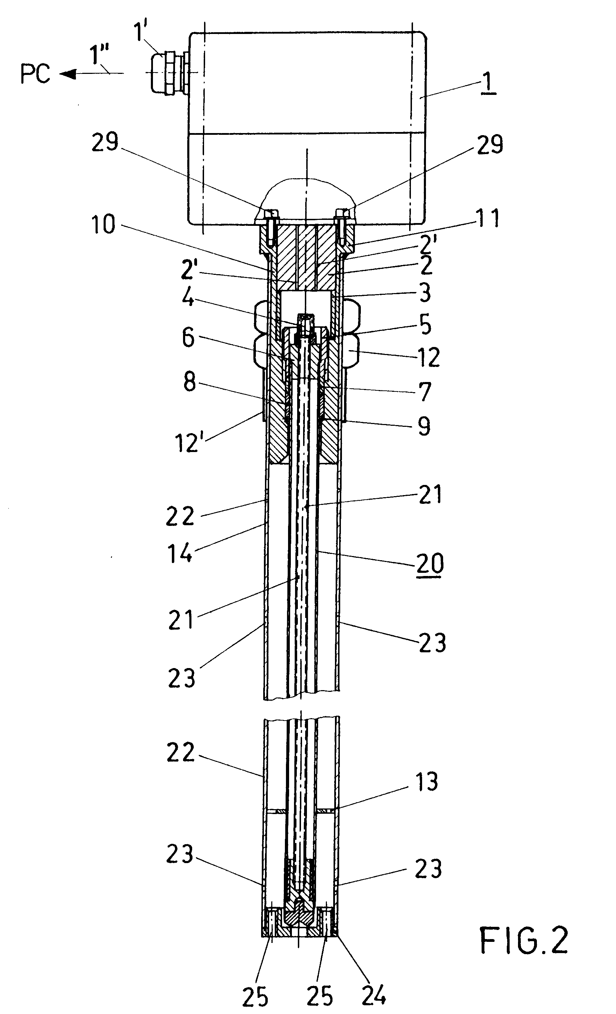

Die praktische Ausgestaltung einer Füllstandsmessvorrichtung nach Fig. 2 weist wiederum die beschriebene Auswerteelektronik 1 auf, an welcher über Schraubverbindungen 29 die eigentliche Mess-Sonde angebracht ist. Die Signalleitung 1˝ ist über eine explosionsgesicherte Stopfbüchse 1′ zu den Schnittstellen des Personalcomputers PC geführt.

Auf einer Halterungsbüchse 10 mit Flansch 11 befindet sich ein Aussenrohr 22 mit aufgesetzten Montagemuttern 12 mit einer Büchse 12′, ein sogenannter Nippel, zur Montage der Sonde im Tankraum. Zum axialen Verschieben und Festklemmen der Mess-Sonde ist die Büchse 12′ in an sich bekannter Weise konisch ausgestaltet.

Im Innern der Halterungsbüchse 10, im Flansch 11, ist eine Flammenrückschlagsicherung 2 mit Bohrungen 2′ eingesetzt. Darunter befindet sich eine Erdungsmutter 4, eine Druckschraube 5, eine Segmentisolation 6 und ein Klemmring 7 aus PTFE (Polytetrafluorethylene; Handelsmarke Teflon) sowie eine Distanzbüchse 8 und ein O-Ring 9, welche die Rohrsegmente 20 axial fixieren und im unteren Bereich durch Zentrierstücke 13 mit peripheren Ausnehmungen (nicht gezeichnet) koaxial zentrieren. Im weiteren sind im Aussenrohr 22 gleichmässig verteilt radiale Bohrungen 23 vorhanden, die dem Durchlass der Medien ins Innere dienen. An der unteren Endseite ist ein als Flansch 24 ausgebildeter Schutzdeckel vorgesehen, welcher ebenfalls Bohrungen 25 als vertikale Durchlässe für die Medien aufweist.

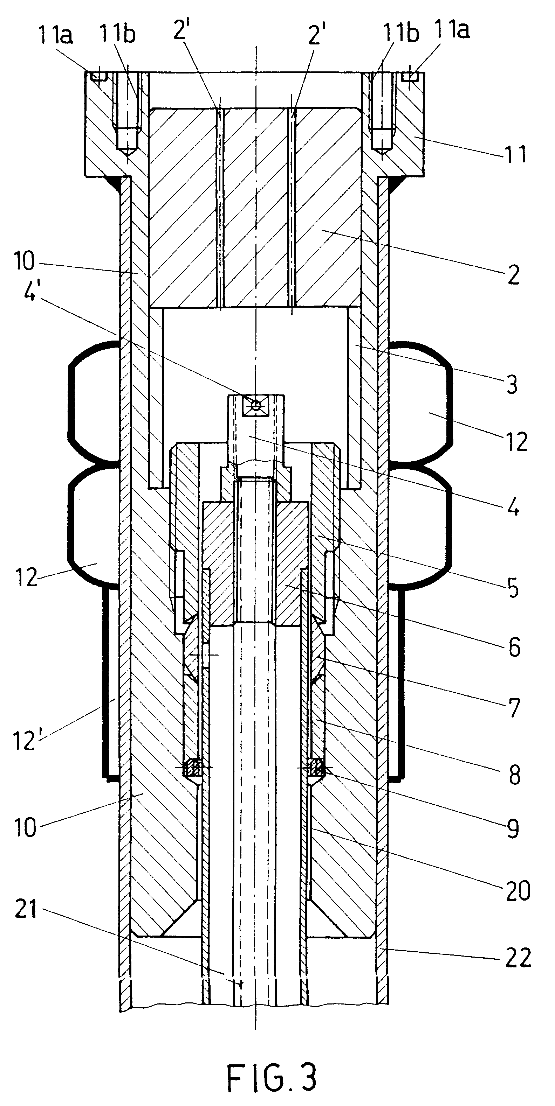

Die vergrösserte Darstellung Fig. 3 erlaubt die Erkennung der vorgängig beschriebenen Einzelteile und gibt Aufschluss über deren mechanisches Zusammenwirken im oberen Bereich der Mess-Sonde. Der axiale Zusammenbau ist durch einen über die Länge der Sonde sich erstreckenden Gewindebolzen 21 realisiert, welcher als Segmentrohrhalter wirkt.

Der Flansch 11 weist hier erkennbar eine Ringnut 11a auf, in welche ein O-Ring eingelegt ist, der eine Abdichtung des Gehäuses der Auswerteelektronik 1 gegenüber dem Flansch 11 bzw. dem Inneren der Mess-Sonde gewährleistet. Die Schraubverbindungen 29, vgl. Fig. 1, sind über sechs Gewindebohrungen 11b realisiert und erlauben einen einfachen Zugriff zu den Einzelteilen.

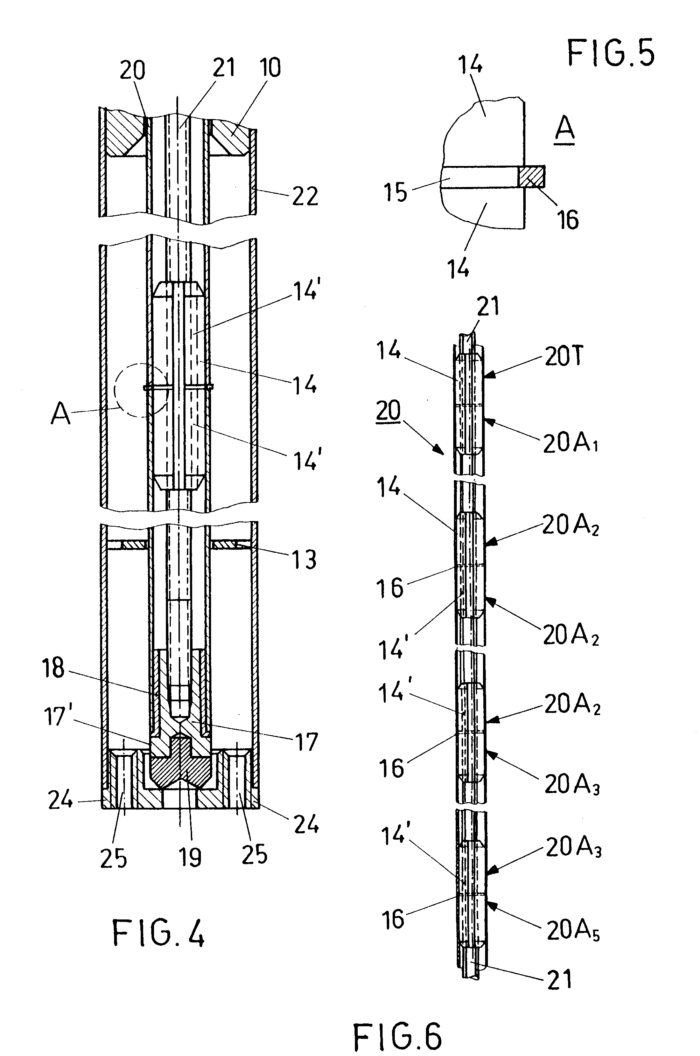

Der weitere Teilbereich gemäss Fig. 4 lässt wiederum die vorgängig beschriebenen Teile erkennen und zusätzlich Segmentkupplungen 14 mit Längsnuten 14′, welche der Kabeldurchführung zu den einzelnen Rohrsegmenten 20 dienen sowie, wie aus Fig. 5 ersichtlich, in der Segmentkupplung 14 eine vorhandene Ringnut 15, in welche ein elastisch wirkender Isolierring 16 aus Nylon eingelegt ist, und der, wie aus Fig. 4 zu sehen, der Distanzierung der einzelnen Rohrsegmente 20 dient.

Über die ganze Länge der Sonde verteilt befinden sich, zumindest in jedem Segment vorhanden, Zentrierstücke 13 mit vier peripheren Ausnehmungen zum ungehinderten Durchfluss der Medien. Am unteren Ende der Sonde befindet sich eine Anpressbüchse 17 mit Flansch 17′ und Gewinde, eine Isolierbüchse 18, eine Endkappe 19, welche sich auf dem Flansch 24 abstützen.

Aus Fig. 6 ist ersichtlich, dass sich die Rohrsegmente 20 nach dem vorgängig beschriebenen Prinzip zu beliebig langen Sonden zusammenbauen lassen. In praxi haben sich Rohrsegmente 20T₀ mit 40 cm Länge, Rohrsegmente 20A₁-20A₄, vgl. Fig. 1, von 25 cm Länge sowie Endsegmente 20A₅ mit 10 cm Länge bewährt.

Realisiert wurde eine Messgenauigkeit im praktischen Tankstellenbetrieb mit Treibstoffen unterschiedlicher Herkunft von weniger als 1 Millimeter, sowohl im unteren Tankbereich mit Wasser, als auch im Treibstoff. Die Temperatur, und damit die volumetrische Ausdehnung der Flüssigkeiten wurden auf 1/10 Grad Celsius genau gemessen und in die Berechnung der Füllmengen bzw. der Treibstoffabgabe einbezogen und dabei laufend mit den Inventurwerten der Kasse verglichen.

Bevorzugt wird die gesamte Mess-Sonde aus nichtrostendem Stahl und chemisch inerten Kunststoffen gefertigt und erlaubt daher auch einen Einsatz in agressiven Medien bzw. im Bereich von chemisch und/oder biologisch reaktiven Medien.

## Patentansprüche

1. Füllstandsmessvorrichtung mit in die zu messenden flüssigen Medien eintauchenden, segmentierten, in einer Reihe angeordneten Mess-Kondensatoren, dadurch gekennzeichnet, dass ein metallisches Rohr (22) als eine Platte des Mess-Kondensators vorgesehen ist, während die zweite Platte als konzentrisch dazu angeordnete Rohrsegmente (20) ausgebildet ist und wobei die Länge der einzelnen Rohrsegmente (20T₀-20Aₙ) ein Mehrfaches ihres Durchmessers beträgt.

2. Füllstandsmessvorrichtung nach Anspruch 1, dadurch gekennzeichnet, dass die Rohrsegmente (20T₀-20Aₙ) konzentrisch im Innern des metallischen Rohres (22) angeordnet sind.

3. Füllstandsmessvorrichtung nach Anspruch 2, dadurch gekennzeichnet, dass die Rohrsegmente (20T₀-20Aₙ) voneinander beabstandet sind, wobei der laterale Isolationsabstand kleiner ist als die zu detektierende Auflösung in Mess-Schritten.

4. Füllstandsmessvorrichtung nach Anspruch 3, dadurch gekennzeichnet, dass zwischen den Rohrsegmenten (20T₀-20Aₙ) Isolierringe (16) vorgesehen sind, welche den äusseren Durchmesser der Rohrsegmente überragen.

5. Füllstandsmessvorrichtung nach Anspruch 1, dadurch gekennzeichnet, dass im Gasraum (G) über den zu messenden Medien ein mit dem elektrischen Null-Potential (E) galvanisch verbundenes Rohrsegment (20T₀) vorgesehen ist.

6. Füllstandsmessvorrichtung nach Anspruch 1, dadurch gekennzeichnet, dass das äussere metallische Rohr (22) mit dem elektrischen Null-Potential (E) galvanisch verbunden ist.

7. Füllstandsmessvorrichtung nach Anspruch 1, dadurch gekennzeichnet, dass die einzelnen Rohrsegmente (20) untereinander durch isolierende Segmentkupplungen (14) mechanisch miteinander verbunden sind.

8. Füllstandsmessvorrichtung nach Anspruch 1, dadurch gekennzeichnet, dass die Segmentkupplungen (14) Längsnuten (14′) und eine zentrale periphere Ringnut (15) aufweisen.

9. Füllstandsmessvorrichtung nach Anspruch 8, dadurch gekennzeichnet, dass in die Ringnut (14) ein elastischer Isolierring (16) eingelegt ist.

10. Füllstandsmessvorrichtung nach Anspruch 1, dadurch gekennzeichnet, dass am oberen Ende des metallischen Rohres (22) eine Flammenrückschlagsicherung (2) vorgesehen ist.

11. Füllstandsmessvorrichtung nach Anspruch 10, dadurch gekennzeichnet, dass in der Flammenrückschlagsicherung (2) konzentrisch angeordnete Bohrungen (2′) vorgesehen sind.

12. Verwendung der Füllstandsmessvorrichtung nach Anspruch 1 zur Messung des Füllstandes von flüssigen Medien mit einer Dielektrizitätskonstanten von 2 - 10.

13. Verwendung der Füllstandsmessvorrichtung nach Anspruch 1 zur Messung des Füllstandes in Tankräumen mit wenigstens einer Schicht eines Treibstoffes und/oder Lösungsmittels.
